# EUROPÄISCHE PATENTSCHRIFT

(11) **EP 1 130 177 B1**
(45) Veröffentlichungstag und Bekanntmachung des Hinweises auf die Patenterteilung: **24.11.2004**
(21) Anmeldenummer: 01101991.6
(22) Anmeldetag: 30.01.2001
(51) Int. Cl.: E03C 1/04, E03C 1/05, F16K 31/60

(54) **Wasserauslaufventilanordnung**
Water outlet valve assembly
Ensemble de soupape sanitaire

(30) Priorität: 09.02.2000 DE 10005946
(43) Veröffentlichungstag der Anmeldung: 05.09.2001
(73) Patentinhaber: Grohe Water Technology AG & Co. KG, 58675 Hemer (DE)
(72) Erfinder: Pawelzik, Manfred, 58675 Hemer (DE); Ludewig, Hans-Jürgen, 31737 Rinteln (DE); Gebhardt, Wolfgang, 58706 Menden (DE); Philipps-Liebich, Hartwig, 58675 Hemer (DE)

(56) Entgegenhaltungen:
- EP-A- 0 245 577
- DE-A- 4 340 713
- US-A- 5 358 213
- US-A- 6 003 170

## Beschreibung

Die Erfindung bezieht sich auf eine Wasserauslaufventilanordnung, insbesondere für den Sanitärbereich, die mit einem Stellhebel versehen ist, der aus einem Gehäuse herausgeführt und um eine quer zur Mittelachse liegenden Achse verschwenkbar zum Einstellen der Durchflussmenge pro Zeiteinheit ausgebildet ist, wobei der Stellhebel von einer Schwenkbahn aufgenommen ist, in deren Bereich ein federbelasteter Körper vorgesehen ist, der mit einer relativ zum Körper verschwenkbaren Rastausnehmung zusammenwirkt, so dass in einem bestimmten Öffnungswinkel eine überwindbare Verrastung des Stellhebels erfolgt.

Eine derartige Wasserauslaufventilanordnung ist aus der deutschen Offenlegungsschrift DE 43 40 713 A1 bekannt. Mit dieser vorbekannten Rasteinrichtung wird erreicht, dass beim Öffnungsvorgang vom Benutzer nicht ungewollt die maximale Ventilöffnung eingestellt wird, so dass der Wasserverbrauch nicht unerheblich vermindert bzw. eine Einsparung erreicht werden kann.

Der Erfindung liegt die Aufgabe zugrunde, eine verbesserte Wasserauslaufventilanordnung vorzuschlagen, mit der eine weitere Reduzierung des Wasserverbrauchs und/oder eine Komforterhöhung beim Wasserzapfvorgang erreicht wird.

Diese Aufgabe wird erfindungsgemäß dadurch gelöst, dass in der Rastposition des Stellhebels, in der der federbelastete Körper von der Rastausnehmung aufgenommen ist, zusätzlich ein elektrischer Schalter einer Steuerelektronik eingeschaltet ist, mit der über eine Detektionseinrichtung der Wasserauslauf berührungslos mit Hilfe wenigstens eines weiteren Ventils gesteuert ist, während ausserhalb der Rastposition des Stellhebels der Schalter ausgeschaltet ist und der Wasserauslauf von dem mit dem Stellhebel betätigten Ventil bestimmt ist. Weitere Ausgestaltungen der Erfindung sind in den Ansprüchen 2 bis 10 angegeben.

Die mit der Erfindung erzielbaren Vorteile bestehen insbesondere darin, dass mit relativ einfachen Mitteln in einer gewünschten, meist mittleren Öffnungsposition der Wasserauslauf berührungslos von einer Steuerelektronik mit einer Detektionseinrichtung erfolgt und somit optimal der Wasserverbrauch auf die benötigte Menge reduziert werden kann. Darüber hinaus wird auch in der Rastposition durch die berührungslose Wasserauslaufsteuerung eine Komforterhöhung erreicht, während in den anderen Öffnungsbereichen der Wasserausfluss von Hand einstellbar ist.
Vorteilhaft kann die Wasserauslaufventilanordnung innerhalb eines sogenannten Einhandmischers vorgesehen werden, bei dem neben der Durchflussmengendosierung das Mischungsverhältnis vom zufließenden Kalt- und Warmwasser bzw. die Mischwassertemperatur in einem anderen Freiheitsgrad, z. B. durch Drehung des Handgriffs, einstellbar ist. Hierbei kann mit einem Handgriff die Mischwassertemperatur und die Wasserausflussmenge pro Zeiteinheit sowie der berührungslos gesteuerte Wasserauslauf in einem festgelegten Öffnungsgrad eingeschaltet werden.
Andererseits kann die erfindungsgemäße Wasserauslaufvorrichtung auch bei Wasserzapfeinrichtungen mit alleiniger Wassermengendosierung eingesetzt werden.

Ein Ausführungsbeispiel der Erfindung ist in der Zeichnung dargestellt und wird im folgenden näher beschrieben. Es zeigt
- Fig. 1: eine Wasserauslaufventilanordnung mit einem an einem Waschtisch anmontierten Einhandmischer mit einer Steuerelektronik, einer Detektionseinrichtung und zusätzliche, von der Steuerelektronik stellbare Ventile in den Zuflussleitungen in schematischer Darstellung;
- Fig. 2: einen Teil des in Fig. 1 gezeigten Einhandmischers in der Schnittebene II in vergrößerter Darstellung.

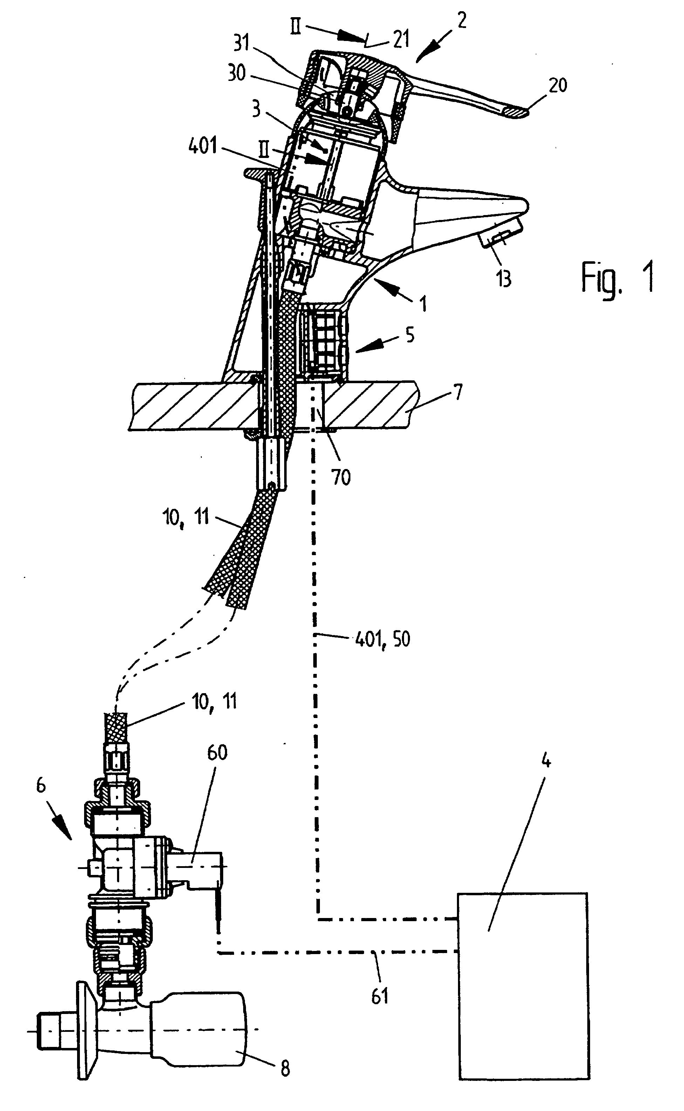

Die in Fig. 1 dargestellte Wasserauslaufventilanordnung wird von einem Armaturenkörper 1, einem Hebelkopf 2 mit einem Ventil 3 zur Mischung und Mengendosierung, einer Steuerelektronik 4, einer Detektionseinrichtung 5 sowie von in Anschlussleitungen 10,11 angeordneten von der Steuerelektronik stellbaren Ventilen 6 gebildet. Der Armaturenkörper 1 mit der Detektionseinrichtung 5 ist oberhalb eines Waschtisches 7 im Bereich einer Öffnung 70 in herkömmlicher Weise befestigt. Die beiden Anschlussleitungen 10,11 für Kalt- und Warmwasser sind ebenfalls durch die Öffnung 70 hindurchgeführt und unter Zwischenschaltung der Ventile 6 jeweils an einem Eckventil 8 des Kalt- oder Warmwasserversorgungsleitungsnetzes angeschlossen. In der Zeichnung ist ledigein Eckventil 8 gezeigt, das zweite Eckventil befindet sich hinter der Zeichnungsebene.

Das handbetätigte Ventil 3 ist mit den einzelnen Ventilelementen in einem Kartuschengehäuse gekapselt angeordnet und mit bekannten Mitteln in der Steckposition im Armaturenkörper 1 fixiert. Aus dem vorstehenden Bereich des Kartuschengehäuses ist ein Stellhebel 30 herausgeführt und mit dem Hebelkopf 2 verbunden. Für die Handbetätigung ist an dem Hebelkopf 2 ein radial vorstehender Handgriff 20 ausgebildet.
Das Ventil 3 ist hierbei so ausgelegt, dass mit einem Auf- oder Abschwenken des Hebelgriffs 20, wobei der Stellhebel 30 in einer Schwenkbahn 31 gleitet, die Durchflussmenge pro Zeiteinheit eingestellt wird, während mit einer Drehbewegung des Hebelkopfs 2 um eine Mittelachse 21 das Mischungsverhältnis des zufließenden Kalt- und Warmwassers bzw. die Temperatur des abgegebenen Mischwassers einstellbar ist.
In Fig. 1 ist der Einhandmischer in einer mittleren Mischstellung in Absperrposition gezeigt. Wird vom Benutzer der Hebelgriff 20 aus dieser Position angehoben, so wird der Wasserausfluss zunehmend freigegeben, so dass das im Ventil 3 erzeugte Mischwasser über ein Wasserauslaufmundstück 13 als Freistrahl abgegeben wird. Hierbei kann durch eine Drehbewegung um eine Mittelachse 21 die Temperatur des abgegebenen Mischwassers stufenlos eingestellt werden.

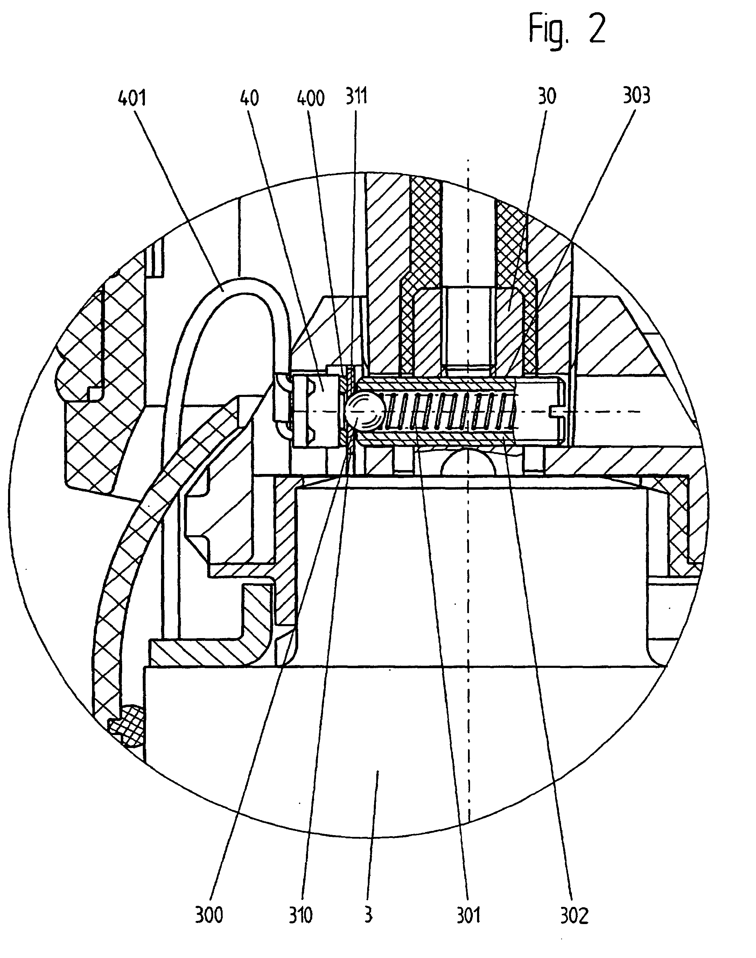

Bei einem Öffnungsgrad von etwa 50% der maximalen Durchflussmenge ist in der Schwenkbahn 31 eine Rastausnehmung 311 in Form einer Bohrung mit einer sphärischen Aussenkung vorgesehen, wie es insbesondere aus Fig. 2 der Zeichnung zu entnehmen ist. An einer Seitenwand der Schwenkbahn 31 ist hierbei eine Hartstoffplatte 310, vorzugsweise Edelstahlplatte, angeordnet, an der ein mit einer Feder 301 belasteter Körper 300 angedrückt wird. Der Körper 300 ist hierbei als Kugel ausgebildet und in einer Hohlschraube 302 mit der Feder 301 gekapselt angeordnet, wobei die eine Baueinheit bildende Hohlschraube 302 in eine Gewindebohrung 303 des Stellhebels 30 einschraubbar ist. Das Gewinde in der Gewindebohrung 303 ist dabei so ausgelegt, dass eine gewisse Schwergängigkeit beim Einschrauben auftritt, so dass ein selbsttätiges Verstellen der Einschraubtiefe bei der Betätigung des Ventils 3 ausgeschlossen ist. An der vom Stellhebel 30 abgekehrten Seite der Hartstoffplatte 310 ist ein elektrischer Schalter 40 angeordnet, wobei ein axial begrenzt verschiebbares Betätigungselement 400 koaxial zur Rastausnehmung 311 angeordnet und so ausgelegt ist, dass der elektrische Schalter 40 von dem vorderen Bereich des Körpers 300, der in der Rastposition die Rastausnehmung 311 in der Hartstoffplatte 310 durchdringt, eingeschaltet wird. Ausserhalb der Rastposition des Stellhebels 30 ist dagegen der elektrische Schalter 40 ausgeschaltet, bzw. es findet eine Unterbrechung der elektrischen Verbindung statt.

Der elektrische Schalter 40 ist mit einer elektrischen Leitung 401 durch die Öffnung 70 mit der unter dem Waschtisch 7 angeordneten Steuerelektronik 4 verbunden. In gleicher Weise ist die im Armaturenkörper 1 angeordnete Detektionseinrichtung 5 mit einer elektrischen Leitung 50 durch die Öffnung 70 mit der Steuerelektronik 4 verbunden. Ausserdem ist die Steuerelektronik 4 über eine elektrische Leitung 61 mit einer elektromagnetischen Stelleinrichtung eines Pilotventils 60 der in den beiden Anschlussleitungen 10,11 angeordneten Ventilen 6 verbunden. Die Ventile 6 sind hierbei als Zwillingsventil ausgebildet, deren beide Durchgänge von dem einen Pilotventil 60 synchron gesteuert werden.

In der in Fig. 2 der Zeichnung gezeigten Schwenkstellung des Stellhebels 30 wird somit die Steuerelektronik 4 eingeschaltet bzw. aktiviert. Die Steuerelektronik 4 ist hierbei so ausgelegt, dass sie nach dem Einschalten unmittelbar die Detektionseinrichtung 5 aktiviert und über das elektromagnetisch stellbare Pilotventil 60 die Anschlussleitungen 10,11 für Kalt- und Warmwasser mit den Ventilen 6 absperrt.
Die Detektionseinrichtung 5 kann beispielsweise als ein mit Infrarotstrahlen arbeitender Annäherungsschalter ausgelegt werden. Wird von einem Benutzer ein Gegenstand, z. B. die Hand, in einem bestimmten Erfassungsbereich, z. B. unterhalb des Wasserauslaufmundstücks 13, gebracht, so wird dieses von der Detektionseinrichtung tung 5 über ein elektrisches Signal der Steuerelektronik 4 gemeldet, worauf von der Steuerelektronik 4 über das Pilotventil 60 das Ventil 6 (Zwillingsventil für den separaten Zufluss von Kalt- und Warmwasser) geöffnet wird, so dass nunmehr in dem handbetätigten Ventil 3 entsprechend der Drehstellung des Hebelkopfes Mischwasser erzeugt wird und über das Wasserauslaufmundstück 13 abgegeben wird. Wird der Gegenstand aus dem Erfassungsbereich der Detektionseinrichtung 5 entfernt, so wird dieses wiederum über ein elektrisches Signal der Steuerelektronik 4 gemeldet, worauf von der Steuerelektronik 4 die Ventile 6 abgesperrt und die Abgabe von Mischwasser über das Auslaufmundstück 13 gestoppt wird. Erst bei einem erneuten Einbringen eines Gegenstandes in den Erfassungsbereich der Detektionseinrichtung 5, erfolgt wiederum die Freigabe des Wasserausflusses in der mit dem Hebelkopf 2 eingestellten Menge und Temperatur.
Wird dagegen der Körper 300 durch eine Schwenkbewegung des Stellhebels 30 aus seiner Rastausnehmung 311 entfernt, so wird von dem elektrischen Schalter 40 die Steuerelektronik 4 ausgeschaltet, wobei vorab die Ventile 6 über das Pilotventil 60 geöffnet werden, so dass in diesen Schwenkstellungen die Ausflussmenge pro Zeiteinheit und das Mischungsverhältnis bzw. die Temperatur des austretenden Wassers allein über das von Hand stellbare Ventil 3 erfolgt.

Das vorstehende Ausführungsbeispiel bezieht sich auf ein Ventil 3 mit dem sowohl das Mischungsverhältnis als auch die Durchflussmenge pro Zeiteinheit einstellbar ist. Selbstverständlich kann die erfindungsgemäße Wasserauslaufventilanordnung auch bei einem von Hand einstellbaren Ventil, mit dem allein die Menge dosiert werden kann, eingesetzt werden.
Außerdem kann auch das von der Steuerelektronik stellbare Ventil stromabwärts hinter dem von Hand stellbaren Ventil angeordnet werden.
Schließlich kann alternativ die Steuerelektronik auch in einem entsprechend ausgelegten Armaturenkörper unmittelbar integriert angeordnet werden, wobei die elektrische Energieversorgung der Steuerelektronik, des Pilotventils sowie der Detektionseinrichtung von einer in der Steuerelektronik angeordneten Batterie oder über das Versorgungsleitungsnetz erfolgen kann.

## Patentansprüche

1. Wasserauslaufventilanordnung, insbesondere für den Sanitärbereich, die mit einem Stellhebel (30) versehen ist, der aus einem Gehäuse herausgeführt und um eine quer zur Mittelachse (21) liegenden Achse verschwenkbar zum Einstellen der Durchflussmenge pro Zeiteinheit ausgebildet ist, wobei der Stellhebel (30) von einer Schwenkbahn (31) aufgenommen ist, in deren Seitenbereich ein federbelasteter Körper (300) vorgesehen ist, der mit einer relativ zum Körper (300) verschwenkbaren Rastausnehmung (311) zusammenwirkt, so dass in einem bestimmten Öffnungswinkel eine überwindbare Verrastung des Stellhebels (30) erfolgt, **dadurch gekennzeichnet, dass** in der überwindbaren Rastposition des Stellhebels (30), in der der federbelastete Körper (300) von der Rastausnehmung (311) aufgenommen ist, zusätzlich ein elektrischer Schalter (40) einer Steuerelektronik (4) eingeschaltet ist, mit der über eine Detektionseinrichtung (5) der Wasserauslauf berührungslos mit Hilfe wenigstens eines weiteren Ventils (6) gesteuert ist, während ausserhalb der Rastposition des Stellhebels (30) der Schalter (40) ausgeschaltet ist und der Wasserauslauf von dem mit dem Stellhebel (30) betätigten Ventil (3) bestimmt ist.

2. Wasserauslaufventilanordnung nach Anspruch 1, **dadurch gekennzeichnet, dass** das mit dem Stellhebel (30) betätigbare Ventil (3) ein Eingriffmischventil ist, wobei mit dem Stellhebel (30) durch eine Drehbewegung um eine Mittelachse (21) das Mischungsverhältnis von zufließendem Kalt- und Warmwasser einstellbar ist.

3. Wasserauslaufventilanordnung nach Anspruch 1 oder 2, **dadurch gekennzeichnet, dass** der elektrische Schalter (40) mit der Rastausnehmung (311) im Bereich der Schwenkbahn (31) und der federbelastete Körper (300), vorzugsweise eine Kugel, am Stellhebel (30) angeordnet ist.

4. Wasserauslaufventilanordnung nach Anspruch 3, **dadurch gekennzeichnet, dass** an einer Seitenwand der Schwenkbahn (31) eine Hartstoffplatte (310), vorzugsweise Edelstahlplatte, vorgesehen ist, an der der federbelastete Körper (300) entlanggleitet, wobei die Rastausnehmung (311) als Bohrung in der Hartstoffplatte (310) ausgebildet und der Schalter (40) an der von der Schwenkbahn (31) abgekehrten Seite der Hartstoffplatte (310) mit einem Betätigungselement (400) koaxial zur Rastausnehmung (311) befestigt ist, so dass in der Rastposition der Körper (300) mit dem vorderen Bereich die als Bohrung ausgebildete Rastausnehmung (311) durchdringt und den Schalter (40) über das Betätigungselement (400) einschaltet.

5. Wasserauslaufventilanordnung nach Anspruch 3 oder 4, **dadurch gekennzeichnet, dass** der Körper (300) mit einer Feder (301) in einer Hohlschraube (302) angeordnet ist, die von einer Gewindebohrung (303) im Stellhebel (30) aufgenommen ist.

6. Wasserauslaufventilanordnung nach wenigstens einem der Ansprüche 1 bis 5, **dadurch gekennzeichnet, dass** der Körper (300) bei etwa 50% der maximalen Durchflussmenge pro Zeiteinheit in die Rastausnehmung (311) einfasst.

7. Wasserauslaufventilanordnung nach wenigstens einem der Ansprüche 1 bis 6, **dadurch gekennzeichnet, dass** das über die Steuerelektronik (4) stellbare Ventil (6) ein elektromagnetisch gesteuertes Pilotventil (60) aufweist.

8. Wasserauslaufventilanordnung nach Anspruch 7, **dadurch gekennzeichnet, dass** das von der Steuerelektronik (4) stellbare Ventil (6) stromaufwärts vor dem von Hand über den Stellhebel (30) betätigten Ventil (3) angeordnet ist.

9. Wasserauslaufventilanordnung nach Anspruch 8, **dadurch gekennzeichnet, dass** das von der Steuerelektronik (4) stellbare Ventil (6) paarweise ausgebildet ist, so dass der Öffnungs- und Schließvorgang synchron für das separat zufließende Kalt- und Warmwasser erfolgt.

10. Wasserauslaufventilanordnung nach Anspruch 8, **dadurch gekennzeichnet, dass** das von der Steuerelektronik (4) stellbare Ventil (6) als Zwillingsventil in den Zuflussleitungen (10,11) für Kalt- und Warmwasser angeordnet und von einem Pilotventil (60) gesteuert ist.

## Claims

1. Water discharge valve arrangement, especially for the field of sanitary engineering, which is provided with a control lever (30) that is lead out of a housing and is arranged to pivot around an axis lying transversely to the centre line (21) in order to adjust the amount of water flowing through per unit of time, wherein the control lever (30) is received by a pivot way (31), in the side region of which there is provided a spring-loaded body (300), which co-operates with a latching recess (311) pivotable relative to the body (300), so that, at a specific opening angle, overridable latching of the control lever (30) is effected, **characterised in that** in the overridable latched position of the control lever (30), in which the spring-loaded body (300) is received by the latching recess (311), additionally an electrical switch (40) of control electronics (4) is switched on, with which, via a detection device (5), the water discharge is controlled contactlessly by means of at least one further valve (6), whilst other than in the latched position of the control lever (30) the switch (40) is switched off and the water discharge is determined by the valve (3) actuated with the control lever (30).

2. Water discharge valve arrangement according to claim 1, **characterised in that** the valve (3) actuatable with the control lever (30) is a single-lever mixing valve, wherein, by means of a rotary movement of the control lever (30) about a centre line (21), the mixture ratio of inflowing cold and hot water is adjustable.

3. Water discharge valve arrangement according to claim 1 or 2, **characterised in that** the electrical switch (40), together with the latching recess (311), is arranged in the region of the pivot way (31) and the spring loaded-body (33), preferably a ball, is arranged on the control lever (30).

4. Water discharge valve arrangement according to claim 3, **characterised in that** on a lateral wall of the pivot way (31) there is provided a plate of hard material (310), preferably a stainless steel plate, along which the spring-loaded body (300) slides, the latching recess (311) being in the form of a bore in the hard material plate (310) and the switch (40) being secured, coaxial with the latching recess (311), by an operating element (400) to the side of the hard material plate (310) remote from the pivot way (31), so that in its latched position the front region of the body (300) enters the latching recess (311), which is in the form of a bore, and switches on the switch (40) by way of the operating element (400).

5. Water discharge valve arrangement according to claim 3 or 4, **characterised in that** the body (300) is arranged with a spring (301) in a hollow screw (302) that is received by a threaded bore (303) in the control lever (30).

6. Water discharge valve arrangement according to at least one of claims 1 to 5, **characterised in that** the body (300) engages in the latching recess at approximately 50% of the maximum flow-through amount per unit of time.

7. Water discharge valve arrangement according to at least one of claims 1 to 6, **characterised in that** the valve (6) adjustable by way of the control electronics (4) comprises an electromagnetically controlled pilot valve (60).

8. Water discharge valve arrangement according to claim 7, **characterised in that** the valve (6) adjustable by the control electronics (4) is arranged upstream of the valve (3) operated by hand by way of the control lever (30).

9. Water discharge valve arrangement according to claim 8, **characterised in that** the valve (6) adjustable by the control electronics (4) is of duple construction so that the opening and closing process is effected synchronously for the separately inflowing cold and hot water.

10. Water discharge valve arrangement according to claim 8, **characterised in that** the valve (6) adjustable by the control electronics (4) is arranged as a twin valve in the inlet pipes (10, 11) for cold and hot water and is controlled by a pilot valve (60).

## Revendications

1. Dispositif de robinet d'eau, en particulier pour le secteur sanitaire, doté d'un levier de réglage (30) qui sort d'un corps et est configuré de manière pivotante autour d'un axe perpendiculaire à l'axe central (21) pour régler le débit par unité de temps, le levier de réglage (30) étant situé sur une voie de pivotement (31) dans la région latérale de laquelle est prévu un corps à ressort (300) qui coopère avec une cavité à cran d'arrêt (311) pivotant par rapport au corps (300), de sorte qu'un enclenchement surmontable du levier de réglage (30) se produit sous un angle d'ouverture défini,
**caractérisé en ce que**
dans la position d'enclenchement surmontable du levier de réglage (30) dans laquelle le corps à ressort (300) est logé dans la cavité à cran d'arrêt (311), est en outre activé un commutateur électrique (40) d'une électronique de réglage (4) par laquelle l'écoulement est contrôlé sans contact par un dispositif de détection (5) à l'aide d'au moins un autre robinet (6), tandis qu'en dehors de la position d'enclenchement du levier de réglage (30), le commutateur (40) est désactivé et l'écoulement d'eau est déterminé par le robinet (3) activé par le levier de réglage (30).

2. Dispositif de robinet d'eau selon la revendication 1,
**caractérisé en ce que**
le robinet (3) activable par le levier de réglage (30) est un robinet mitigeur, le rapport de mélange des flux d'eau chaude et froide étant réglable avec le levier de réglage (30) par un mouvement de rotation autour d'un axe central (21).

3. Dispositif de robinet d'eau selon la revendication 1 ou 2,
**caractérisé en ce que**
le commutateur électrique (40) est disposé avec la cavité à cran d'arrêt (311) dans la région de la voie de pivotement (31) et le corps à ressort (300), de préférence une boule, sur le levier de réglage (30).

4. Dispositif de robinet d'eau selon la revendication 3,
**caractérisé en ce que**
sur une paroi latérale de la voie de pivotement (31) est prévue une plaque de matière dure (310), de préférence une plaque d'acier spécial, le long de laquelle glisse le corps à ressort (300), la cavité à cran d'arrêt (311) étant configurée comme un alésage dans la plaque de matière dure (310) et le commutateur (40) étant fixé sur la face opposée à la voie de pivotement (31) de la plaque de matière dure (310) avec un élément d'activation (400), de manière coaxiale par rapport à la cavité à cran d'arrêt (311), de sorte qu'en position d'enclenchement, le corps (300) pénètre dans la région antérieure de la cavité à cran d'arrêt (311) configurée comme un alésage et active le commutateur (40) par le biais de l'élément d'activation (400).

5. Dispositif de robinet d'eau selon la revendication 3 ou 4,
**caractérisé en ce que**
le corps (300) est disposé avec un ressort (301) dans une vis creuse (302) logée dans un alésage taraudé (303) du le levier de réglage (30).

6. Dispositif de robinet d'eau selon au moins une des revendications 1 à 5,
**caractérisé en ce que**
le corps (300) s'enchâsse dans la cavité à cran d'arrêt (311) à environ 50% du débit maximal par unité de temps.

7. Dispositif de robinet d'eau selon au moins une des revendications 1 à 6, **caractérisé en ce que**
le robinet (6) réglable par l'électronique de réglage (4) présente une vanne-pilote (60) contrôlée de manière électromagnétique.

8. Dispositif de robinet d'eau selon la revendication 7,
**caractérisé en ce que**
le robinet (6) réglable par l'électronique de réglage (4) est disposé en amont, avant le robinet (3) activé à la main par le levier de réglage (30).

9. Dispositif de robinet d'eau selon la revendication 8,
**caractérisé en ce que**
le robinet (6) réglable par l'électronique de réglage (4) est configuré de manière jumelée, de sorte que les opérations d'ouverture et de fermeture pour l'eau froide et l'eau chaude qui s'écoulent séparément sont synchrones.

10. Dispositif de robinet d'eau selon la revendication 8,
**caractérisé en ce que**
le robinet (6) réglable par l'électronique de réglage (4) est disposé dans les conduites d'alimentation (10, 11) d'eau froide et d'eau chaude comme un robinet jumelé et commandé par une vanne-pilote (60).
